## Europäisches Patentamt
## European Patent Office
## Office européen des brevets

(19)

(11) Veröffentlichungsnummer: **0 064 570**
**B2**

(12) **NEUE EUROPÄISCHE PATENTSCHRIFT**

(45) Veröffentlichungstag der neuen Patentschrift:
11.07.90

(51) Int. Cl.⁵: **B 23 K 11/24, H 02 M 5/42**

(21) Anmeldenummer: 81103674.8

(22) Anmeldetag: 13.05.81

(54) Elektrische Energiequelle für eine Widerstandsschweissmaschine.

(43) Veröffentlichungstag der Anmeldung:
17.11.82 Patentblatt 82/46

(73) Patentinhaber: L. SCHULER GmbH
Bahnhofstrasse 41 - 67 Postfach 1222
D-7320 Göppingen (DE)

(45) Bekanntmachung des Hinweises auf
die Patenterteilung:
18.09.85 Patenblatt 85/38

(72) Erfinder: Belamaric, Zelimir
Av. des Collèges 63
CH-1009 Pully (CH)

(45) Bekanntmachung des Hinweises auf die
Entscheidung über den Einspruch:
11.07.90 Patentblatt 90/28

(84) Benannte Vertragsstaaten:
AT BE CH DE FR GB IT LI LU NL SE

(56) Entgegenhaltungen:
DE-A-2 004 609
DE-B- 970 768
GB-A-2 046 537

SCHULER Firmenprospekt "LCS Body-Welder"
1983

EP 0 064 570 B2

## Beschreibung

Die Erfindung betrifft eine elektrische Energiequelle mit einem statischen Inverter und einem Schweißtransformator für eine Widerstandsschweißmaschine, wobei ein erster statischer, mittels Halbleiterelementen aufgebauter Frequenzumrichter verwendet wird, dessen Ausgangswechselspannung aus Impulsfolgen gebildete Halbwellen aufweist, wobei die Schweißstromhalbwellen angenähert rechteckförmigen Verlauf aufweisen.

Eine derartige Energiequelle ist bereits in der DE—A—16 13 730 beschrieben. Mittels dieser Energiequelle werden höherfrequente Schweißströme erzeugt, deren Impulsform einem Rechteck bzw. einem Quadrat angenähert ist. Die Einrichtung arbeitet jedoch nur in begrenztem Maße zufriedenstellend, da die Impulsform nur in engen Grenzen beeinflußt werden kann. Eine Regelung der übertragenen Schweißenergie ist bei der bekannten Energiequelle nicht vorgesehen.

Hiervon ausgehend liegt der Erfindung die Aufgabe zugrunde, eine elektrische Energiequelle anzugeben, bei der die Impulsform der Rechteckform besser angenähert werden kann, die Amplitude und das Impuls-Pause-Verhältnis des Schweißstromes in weiten Grenzen variierbar sind und den jeweiligen Erfordernissen während des Schweißvorganges folgen können.

Diese Aufgabe ist gemäß der Erfindung dadurch gelöst, daß parallel zu dem ersten Frequenzumrichter mindestens ein zweiter Frequenzumrichter geschaltet ist, dessen Ausgangswechselspannung zur Ausgangswechselspannung des ersten Frequenzumrichters im Primärkreis des Schweißtransformators addierbar ist, wobei zur Erzielung steiler Anstiegsflanken des Schweißstromes an der Schweißstromhalbwellenflanke zunächst die Impulse der Ausgangswechselspannungen addiert werden, und im weiteren Verlauf der Halbwelle die Impulse abwechselnd aus den Frequenzumrichtern geliefert werden.

Vorteilhafte Ausgestaltungen der Erfindung sind den abhängigen Ansprüchen 2 bis 8 zu entnehmen.

Durch den Aufbau der Energiequelle mit mindestens zwei gleichartigen Frequenzumrichtern, deren Ausgangswechselspannungen in dem Primärkreis eines Schweißtransformators zu Beginn einer Schweißstromhalbwelle phasensynchron addierbar sind, können Impulsformen mit sehr hohen Flankensteilheiten erreicht werden. Ein exakter Schweißbeginn und ein genaues Schalten des Schweißendes sind hierdurch möglich. Weiterhin erlaubt die hohe Flankensteilheit des Schweißstromanstieges in dem Sekundärkreis des Schweißtransformators ein Schweißen mit sehr niedriger Frequenz auch bei hohen Produktionsgeschwindigkeiten. Die Reversierung des Schweißstromes gelingt in einer vernachlässigbar kurzen Zeit, so daß die Frequenz nahezu keinen Einfluß auf die Qualität der Schweißnaht hat. Durch die Wahl einer niederen Frequenz des Schweißstromes (unterhalb von $f_s = 100$ Hz) werden Verluste durch induktive Wirbelströme weitgehend vermieden. Die Stromregelung, wie sie in den Ansprüchen 7, 8 angegeben ist, ermöglicht eine genaue Dosierung der Schweißenergie.

Da die Frequenzumrichter gleichartig aufgebaut sind, können in einfacher Weise so viel Frequenzumrichter parallel geschaltet werden, wie für einen schnellen Stromanstieg bzw. für eine schnelle Reversierung erforderlich sind.

Es ist zwar bereits eine elektrische Energiequelle mit einem statischen Inverter und einem Schweißtransformator für eine Widerstandsschweißmaschine an sich bekannt (US—A—3 636 298), bei der ein statischer, mittels Halbleitern aufgebauter Frequenzumrichter verwendet wird und die Schweißstromhalbwellen angenähert rechteckförmigen Verlauf aufweisen, bei dieser bekannten elektrischen Energiequelle werden jedoch die Halbwellen der Ausgangswechselspannung nicht aus Impulsfolgen gebildet, sondern aus den gleichgerichteten Phasenspannungen einer dreiphasigen Wechselstromversorgung, die an einen Rechteckwellengenerator angelegt werden. Der Rechteckwellengenerator läßt seine Ausgangsrechtecksspannung an den Flanken ausreichend weit überschwingen. Das dient zum Zweck, auch den Schweißstrom überschwingen zu lassen, um die fehlende Schweißleistung während der Stromreversierung zu kompensieren. Auch diese bekannte Energiequelle arbeitet nur in begrenztem Maße zufriedenstellend, weil der Rechteckwellengenerator offenbar nicht in der Lage ist, eine Ausgangsspannung mit sehr steilen Flanken zu liefern, weshalb auch der Schweißstrom keine sehr steilen Flanken hat. Außerdem schwingt der Schweißstrom and den Flanken stets über, wobei dieses Überschwingen mit abnehmender Spannung und Frequenz prozentual sogar noch beträchtlich zunimmt. Die elektrische Energiegelle nach der Erfindung arbeitet wesentlich zufriedenstellender, denn die Ausgangswechselspannungen der Frequenzumrichter bestehen einfach aus Folgen von Impulsen, deren Addition wesentlich steilere Flanken der Schweißstromhalbwellen ergibt, ohne daß der Schweißstrom an den Flanken überschwingt.

Anhand einer Zeichnung ist nachfolgend ein Beispiel einer erfindungsgemäßen elektrischen Energiequelle in Form eines Blockschaltbildes und eines Spannungs- und Stromdiagrammes näher erläutert.

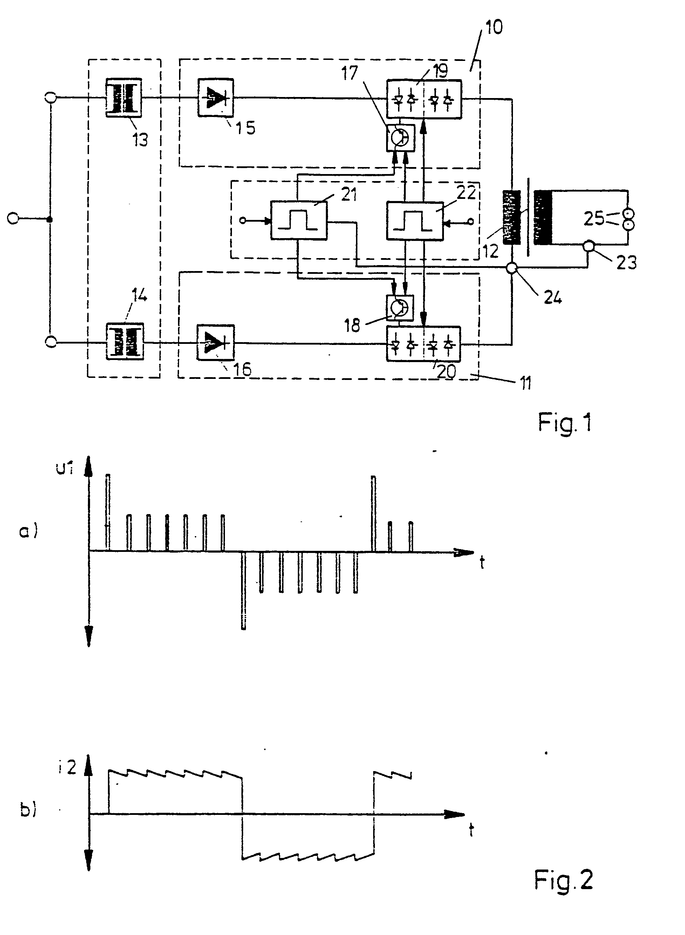

In Fig. 1 ist eine elektrische Energiequelle gezeigt, die prinzipiell aus einem ersten Frequenzumrichter 10 und einem zweiten Frequenzumrichter 11 aufgebaut ist. Die Ausgänge der beiden Frequenzumrichter 10, 11 sind auf den Primärkreis eines Schweißtransformators 12 geschaltet, während deren Eingänge mit einer Netzspannung von z.B. 3 × 380 V Drehstrom beaufschlagt sind. Die Netzspannung gelangt über Trenntransformatoren 13, 14 auf übliche Gleichrichterbrücken 15, 16 die eine Gleichspannung erzeugen, mittels derer die eigentlichen Wechselrichterstufen, je bestehend aus einer Transistorkommutierungsstufe 17, 18 und einer Thyristorleistungsstufe 19, 20 gespeist werden. Der Aufbau und die Funktion der beiden letztgenannten Stufen sind grundsätz-lich aus der DE—A—23 36 429 bekannt.

Die erfindungsgemäße Energiequelle weist weiterhin einen Schweißstromregler 21 und einen Frequenzregler 22 auf, die Bestandteil einer nicht näher dargestellten Steuerungselektronik sind. Der Schweißstromregler 21 ist mit einer Rückführung verbunden, die eine Strom-Istwert-Erfassung entweder im Sekundärkreis oder im Primärkreis über einen Meßwertumsetzer 23, 24 ermöglicht. Der Frequenzregler 22 bestimmt nach Vorgabe die Frequenz des Schweißstromes, der über Elektrodenrollen 25 und das dazwischenliegende, in der Zeichnung nicht dargestellte Schweißgut fließt.

Mit Hilfe der Fig. 2 soll die prinzipielle Funktion einer vorhergehend beschriebenen Energiequelle erläutert werden.

Im Diagramm Fig. 2a ist die am Primärkreis des Schweißtransformators 12 anliegende Spannung $u_1$ dargestellt, während in Fig. 2b der zugehörige Schweißstrom $i_2$ im Sekundärkreis des Schweiß-transformators 12 gezeigt ist. Mit einem der Frequenzumrichter 10, 11 kann ein Spannungsimpuls bestimmter Länge und Amplitude erzeugt werden. Zu Beginn einer Schweißstromhalbwelle erfolgt die phasensynchrone Addition zweier der-artiger Spannungsimpulse und der Schweiß-strom $i_2$ im Sekundärkreis steigt steil an. Der Schweißstrom gelangt in sehr kurzer Zeit auf seine eingestellte Amplitude, die über den Schweißstromregler 21 konstant gehalten wird. Um den Schweißstrom während einer Halbwelle auf dem konstanten Wert zu halten, werden von den Frequenzumrichtern 10, 11 abwechselnd Spannungsimpulse erzeugt, die im Sekundärkreis eine amplitudenmäßig geringe Modulation des Schweißstromes $i_2$ mit relativ hoher Frequenz bewirken. Nach Ablauf der ersten Halbwelle des rechteckförmigen Schweißstromes $i_2$ werden beide Frequenzumrichter 10, 11 mit entgegengesetzter Polarität phasensynchron und additiv auf den Primärkreis des Schweißtransformators 12 geschaltet (siehe Fig. 2a), so daß eine Reversie-rung des Schweißstromes $i_2$ in vernachlässigbar kurzer Zeit erfolgt.

Die weitere Funktion ergibt sich jetzt aus dem Vorherbeschriebenen.

Mittels der erfindungsgemäßen Energiequelle können Schweißströme erzeugt werden, die nahezu Gleichstromcharakter bezogen auf eine zu schweißende Zarge aufweisen, also auch zur Durchführung des Verfahrens nach der europäischen Patentanmeldung EP—A—0 033 962 geeignet sind. Schweißströme mit höherer Frequenz, z.B. Netzfrequenz, können ebenfalls erzeugt werden, wobei der Einfluß der Frequenz des Schweißstromes auf die Qualität der Schweißnaht in Abhängigkeit von der Produktionsgeschwindigkeit (Schweißgeschwindigkeit) ohne Bedeutung ist.

**Patentansprüche**

1. Elektrische Energiequelle mit einem statischen Inverter und einem Schweißtransformator (12) für eine Widerstandsschweißmaschine, wobei ein erster statischer, mittels Halbleiterelementen aufgebauter Frequenzumrichter (10) verwendet wird, dessen Ausgangswechselspannung aus Impulsfolgen gebildete Halbwellen auf-weist, wobei die Schweißstromhalbwellen ange-nähert rechteckförmigen Verlauf aufweisen, dadurch gekennzeichnet, daß parallel zu dem ersten Frequenzumricher (10) mindestens ein zweiter Frequenzumrichter (11) geschaltet ist, dessen Ausgangswechselspannung zur Ausgangswechselspannung des ersten Frequenzumrichters (10) im Primärkreis des Schweißtransformators (1) addierbar ist, wobei zur Erzielung steiler Anstiegsflanken des Schweißstromes an der Schweißstromhalbwellenflanke zunächst die Impulse der Ausgangswechselspannung addiert werden, und im weiteren Verlauf der Halbwelle die Impulse abwechselnd aus den Frequenzumrichtern geliefert werden.

2. Elektrische Energiequelle nach Anspruch 1, dadurch gekennzeichnet, daß die Amplituden der Ausgangswechselspannungen der Frequenzumrichter (10, 11) variierbar sind.

3. Elektrische Energiequelle nach Anspruch 1, dadurch gekennzeichnet, daß die Amplitude der Ausgangswechselspannung des ersten Frequenzumrichters (10) varriierbar ist, und daß die Ampli-tude der Ausgangswechselspannung der weite-ren Frequenzumrichter (11) konstant ist.

4. Elektrische Energiequelle nach Anspruch 1, dadurch gekennzeichnet, daß die Amplituden der Ausgangswechselspannungen der Frequenzumrichter (10, 11) konstant sind.

5. Elektrische Energiequelle nach einem der Ansprüche 1 bis 4, dadurch gekennzeichnet, daß die Impuls-Pause-Verhältnisse der Ausgangswechselspannungen der Frequenzumrichter (10, 11) variierbar sind.

6. Elektrische Energiequelle nach einem der Ansprüche 1 bis 5, dadurch gekennzeichnet, daß die Impulsformen der Ausgangswechselspannungen der Frequenzumrichter (10, 11) rechteckförmig sind.

7. Elektrische Energiequelle nach einem der Ansprüche 1 bis 6, dadurch gekennzeichnet, daß der Sekundärkreis des Schweißtransformators (12) mit einem Meßwertumsetzer (23) beschaltet ist, dessen dem Istwert des Schweißstromes ($i_2$) proportionales Ausgangssignal einem Schweißstromregler (21) zugeführt ist, und daß der das Stellsignal führende Ausgang des Schweißstromreglers (21) mit den Frequenzumrichtern (10, 11) verbunden ist.

8. Elektrische Energiequelle nach einem der Ansprüche 1 bis 6, dadurch gekennzeichnet, daß der Primärkreis des Schweißtransformators (12) mit einem Meßwertumsetzer (24) beschaltet ist, dessen dem Istwert des Schweißstromes ($i_2$) pro-portionales Ausgangssignal einem Schweiß-stromregler (21) zugeführt ist, und daß der das Stellsignal führende Ausgang des Schweißstromreglers (21) mit den Frequenzumrichtern (10, 11) verbunden ist.

**Revendications**

1. Source d'energie électrique avec un onduleur et un transformateur de soudage (12) pour une machine à souder par résistance, utilisant un convertisseur de fréquence (10) constitué d'éléments semi-conducteurs, dont la tension alternative de sortie présente des demi-alternances formées de trains d'impulsions, les demi-alternances du courant de soudage ayant une allure approximativement rectangulaire, caractérisée en ce qu'elle comprend, monté en parallèle avec ledit premier convertisseur de fréquence (10), au moins un second convertisseur de fréquence (11) dont la tension alternative de sortie peut être ajoutée à celle du premier convertisseur (10) dans le circuit primaire du transformateur de soudage (12), l'agencement étant tel que, afin d'obtenir un courage de soudage avec des flancs montants raides, les impulsions des tensions alternatives de sortie sont d'abord additionnées au front des demi-alternances du courant de soudage et les impulsions pour la suite de la demi-alternance sont fournies alternativement par les deux convertisseurs de fréquence.

2. Source d'énergie selon la revendication 1, caractérisée en ce que les amplitudes des tensions alternatives de sortie des convertisseurs de fréquence (10, 11) sont variables.

3. Source d'énergie selon la revendication 1, caractérisée en ce que l'amplitude de la tension alternative de sortie du premier convertisseur de fréquence (11) est variable et que l'amplitude de la tension alternative de sortie de l'autre convertisseur de fréquence (11) est constante.

4. Source d'énergie selon la revendication 1, caractérisée en ce que les amplitudes des tensions alternatives de sortie des convertisseurs de fréquence (10, 11) sont constantes.

5. Source d'énergie selon l'une des revendications 1 à 4, caractérisée en ce que le rapport impulsion/intervalle entre les impulsions des tensions alternatives de sortie des convertisseurs de fréquence (10, 11) est variable.

6. Source d'énergie selon l'une des revendications 1 à 5, caractérisée en ce que les impulsions des tensions alternatives des sortie des convertisseurs de fréquence (10, 11) ont une forme rectangulaire.

7. Source d'énergie selon l'une des revendications 1 à 6, caractérisée en ce qu'un transducteur de mesure (23) monté dans le circuit secondaire du transformateur de soudage (12) délivre un signale de sortie qui est proportionnel à la valeur réelle du courant de soudage ($i_2$) et qui est appliqué à un dispositif (21) de réglage du courant de soudage et en ce que la sortie de ce dispositif (21) présentant le signal de réglage est connectée aux convertisseurs de fréquence (10, 11).

8. Source d'énergie selon l'une des revendications 1 à 6, caractérisée en ce qu'un transducteur de mesure (23) monté dans le circuit primaire du transformateur du soudage (12) délivre un signal de sortie qui est proportionnel à la valeur réelle du courant de soudage ($i_2$) et qui est appliqué à un dispositif (21) de réglage du courant de soudage et en ce que la sortie de ce dispositif (21) présentant le signal de réglage est connectée aux convertisseurs de fréquence (10, 11).

**Claims**

1. Electrical energy source with a static inverter and a welding transformer (12) for a resistance-welding machine, a first static frequency converter (10) composed of semiconductor elements being used, its alternating output voltage having half-waves formed from pulse trains, and the welding-current half-waves having an approximately rectangular course, characterised in that connected in parallel with the first frequency converter (10) is at least one second frequency converter (11), the alternating output voltage of which can be added to the alternating output voltage of the first frequency converter (10) in the primary circuit of the welding transformer (12), and to obtain steep leading edges of the welding current, the pulses of the alternating output voltages are first added at the welding-current half-wave edge and in the further course of the half-wave the pulses are supplied alternately from each of the frequency converters.

2. Electrical energy source according to Claim 1, characterised in that the amplitudes of the alternating output voltages of the frequency converters (10, 11) are variable.

3. Electrical energy source according to Claim 1, characterised in that the amplitude of the alternating output voltage of the first frequency converter (10) is variable, and in that the amplitude of the alternating output voltage of the further frequency converters (1) is constant.

4. Electrical energy source according to Claim 1, characterised in that the amplitudes of the alternating output voltages of the frequency converters (10, 11) are constant.

5. Electrical energy source according to one of Claims 1 to 4, characterised in that the pulse/interval ratios of the alternating output voltages of the frequency converters (10, 11) are variable.

6. Electrical energy source according to one of Claims 1 to 5, characterised in that the pulse shapes of the alternating output voltages of the frequency converters (10, 11) are rectangular.

7. Electrical energy source according to one of Claims 1 to 6, characterised in that the secondary circuit of the welding transformer (12) is wired to a transducer (23), of which the output signal proportional to the actual value of the welding current ($i_2$) is supplied to a welding-current regulator (21), and in that the output of the welding current regulator (21) carrying the regulating signal is connected to the frequency converters (10, 11).

8. Electrical energy source according to one of Claims 1 to 6, characterised in that the primary circuit of the welding transformer (12) is wired to a transducer (24), of which the output signal proportional to the actual value of the welding current ($i_2$) is supplied to the welding-current regulator (21), and in that the output of the welding-current regulator (21) carrying the regulating signal is connected to the frequency converters (10, 11).

EP 0 064 570 B2

Fig. 1

Fig. 2

1